# EUROPEAN PATENT APPLICATION

(11) **EP 2 487 103 A1**
(43) Date of publication of application: **15.08.2012**
(21) Application number: 11154289.0
(22) Date of filing: 14.02.2011
(51) Int. Cl.: B63C 11/42, E21B 41/04, F16G 15/00

(54) **Actuator apparatus**

(71) Applicant: Selantic AS, 5863 Bergen (NO)
(72) Inventor: The designation of the inventor has not yet been filed
(74) Representative: Vinsome, Rex Martin

(57) **Abstract**

An actuator apparatus adapted to be remotely actuated underwater is disclosed. The apparatus comprises a body (204), a piston having a pin (220) extending therefrom, wherein the piston is adapted to sealingly engage the body to define a piston chamber (216), and a conduits (222) for connecting the piston chamber to a fluid container (232) to create a pressure difference between the piston chamber and the ambient water to cause the piston to move relative to the body to cause the pin to move between first and second positions thereof.

## Description

The present invention relates to a remotely operable actuator apparatus for underwater use and relates particularly, but not exclusively, to an actuator apparatus for underwater use operable by remotely operated vehicles (ROVs) or as a self contained unit operable by means of an acoustic trigger signal.

Installation of subsea structures in deep water often requires connection and disconnection of rigging hardware by means of a remotely operated vehicle (ROV). This is often a time consuming activity in deep water, and therefore a very costly operation. The incentive for carrying this out more quickly and safely is therefore high. Typically, the rigging or mooring hardware is connected to heavy structures, and connection or disconnection of the rigging is not an easy task. Movement of large shackle pins is almost impossible unless hydraulic cylinders or other arrangements are used. Shackles and hooks used for this purpose could have a weight of typically 200 - 2000kg. When connected to a pad eye on a structure, the ROV will not be able to release the pin without the use of some active system.

Preferred embodiments of the present invention seek to overcome this disadvantage of known apparatus.

According to the present invention, there is provided an actuator apparatus adapted to be remotely actuated underwater, the apparatus comprising:
a body;
at least one piston member having at least one respective actuator member extending therefrom, wherein at least one said piston member is adapted to sealingly engage the body to define a respective piston chamber; and
connector means adapted to connect at least one said piston chamber to at least one respective pressure source to create a pressure difference to cause the corresponding said piston member to move relative to the body at least partly under the action of pressure of the ambient water to cause the or each corresponding said actuator member to move from a first position thereof to a second position thereof.

By providing connector means adapted to connect at least one said piston chamber to at least one respective pressure source to create a pressure difference to cause the corresponding said piston member to move relative to the body at least partly under the action of pressure of the ambient water to cause the or each corresponding said actuator member to move from a first position thereof to a second position thereof, this provides the advantage that movement of the piston member can be carried out by a remotely operated vehicle, and greater power can be achieved than for apparatus in which the or each actuator member is directly driven by a remotely operated vehicle.

The apparatus may further comprise at least one first pressure source adapted to have a lower pressure than the pressure in at least one said piston chamber prior to connection thereto.

At least one said pressure source may comprise at least one respective gas container.

This provides the advantage that for example by providing a container of air at lower pressure than the water pressure at the operating depth, the water in which the apparatus operates can be used to occupy the piston chamber, and entry of water into the fluid container can be used to create a pressure difference between the piston chamber and the ambient water. This provides the advantage of low energy consumption, by using the pressure generated by the ambient water, and reduces the risk of environmental damage if the apparatus should leak.

At least one said piston member may be adapted to sealingly engage the body to define a respective first said piston chamber and a respective second said piston chamber, and said connector means may be adapted to connect at least one said first piston chamber and the cooperating said second piston chamber to respective first and second sources of pressure urging the corresponding said actuator member in opposite directions.

The apparatus may further comprise locking means for locking at least one said piston member in position relative to the body.

The connector means and/or said locking means may be remotely operable.

The connector means and/or said locking means may be operable by means of a remotely operated vehicle (ROV).

The connector means and/or said locking means may be acoustically operable.

At least one said piston chamber may be adapted to contain water and to be in fluid communication with water surrounding the apparatus.

This provides the advantage of enable the forces on both sides of the piston member to be balanced.

At least one said actuator member may be a blade adapted to cut a cable, rope or pin.

The apparatus may further comprise at least one suspension portion for enabling the apparatus to be suspended such that the suspension portion is substantially vertically above the centre of gravity of the apparatus when submerged.

The apparatus may further comprise braking means for resisting movement of at least one said actuator member to said second position thereof.

This provides the advantage of reducing the risk of damage to the apparatus in deep water, where pressure differences are significant.

The braking means may comprise restrictor means for restricting flow of water out of at least one said piston chamber as a result of movement of at least one said actuator member from said first position thereof to said second position thereof.

The braking means may comprise at least one respective extension member extending from at least one said actuator member through said body to contact the ambient water such that the ambient water in contact with the or each extension member urges the corresponding said actuator member towards said first position thereof.

The body may further comprise at least one removable position through which at least one said actuator member extends in use.

This provides the advantage of enabling the dimension, such as cross sectional area, of the actuator member to be chosen so as to provide a degree of resistance to movement of the corresponding actuator member appropriate to the water depth in which the apparatus is to be used.

Preferred embodiments of the invention will now be described, by way of example only and not in any limitative sense, with reference to the accompanying drawings, in which:
Figure 1 shows a schematic side view of an apparatus embodying the present invention in a first configuration thereof;
Figure 2 shows a schematic side view of an apparatus embodying the present invention in a second configuration thereof;
Figure 3 shows a side cross sectional view of a first embodiment of the present invention having a pin in a first position thereof;
Figure 4 shows a perspective view of the apparatus of Figure 3;
Figure 5 is a side cross sectional view, corresponding to Figure 3, with the pin in a second position thereof;
Figure 6 is a side cross sectional view of a second embodiment of the present invention with a pin in a first position thereof;
Figure 7 is a perspective view of the apparatus of Figure 6;
Figure 8 is a side cross sectional view, corresponding to Figure 6 with the pin in a second position thereof;
Figure 9 is a side cross sectional view of a third embodiment of the present invention;
Figure 10 is a side cross sectional view of a fourth embodiment of the present invention in a first position thereof;
Figure 11 is a side cross sectional view of the apparatus of Figure 10 in a second position thereof;
Figure 12 is a side cross-sectional view of a fifth embodiment of the present invention at a first stage of operation thereof;
Figure 13 is a side cross-sectional view of the apparatus of Figure 12 at a second stage of operation thereof; and
Figure 14 is a side cross-sectional view of the apparatus of Figure 12 at a third stage of operation thereof.

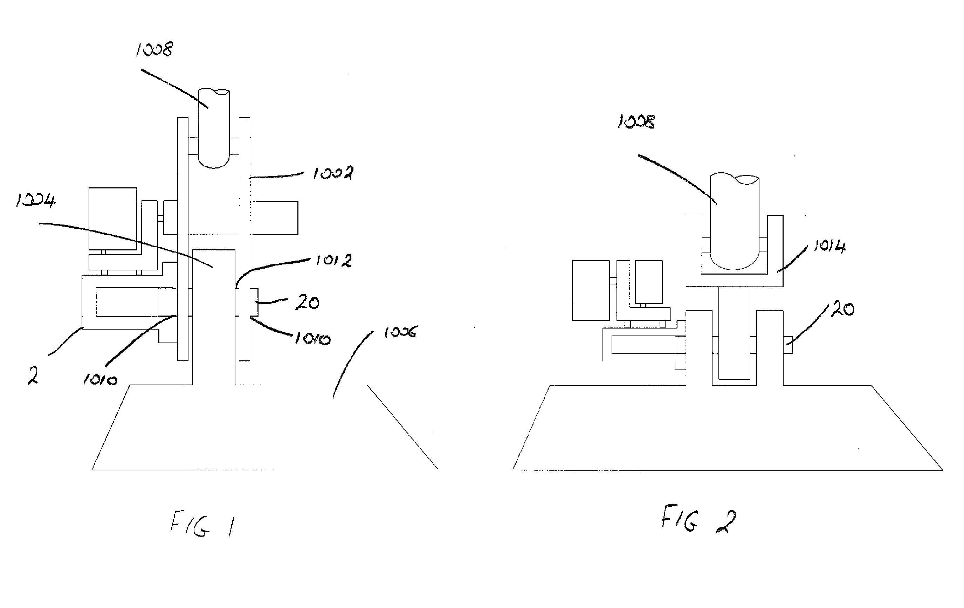

Referring to Figure 1, an actuator apparatus 2 embodying the present invention is mounted to a shackle 1002 such that a pin 20 of the apparatus 2 extends through a pair of aligned apertures 1010 in the shackle 1002 and an aperture 1012 in a pad-eye 1004 of a structure 1006 in order to enable the structure 1006 to be lifted by means of a sling 1008 mounted to the shackle 1002. In a second configuration, shown in Figure 2, the apparatus 2 is mounted to the pad-eye 1004 of the structure 1006 such that the pin 20 extends through a connector 1014 to which the sling 1008 is mounted.

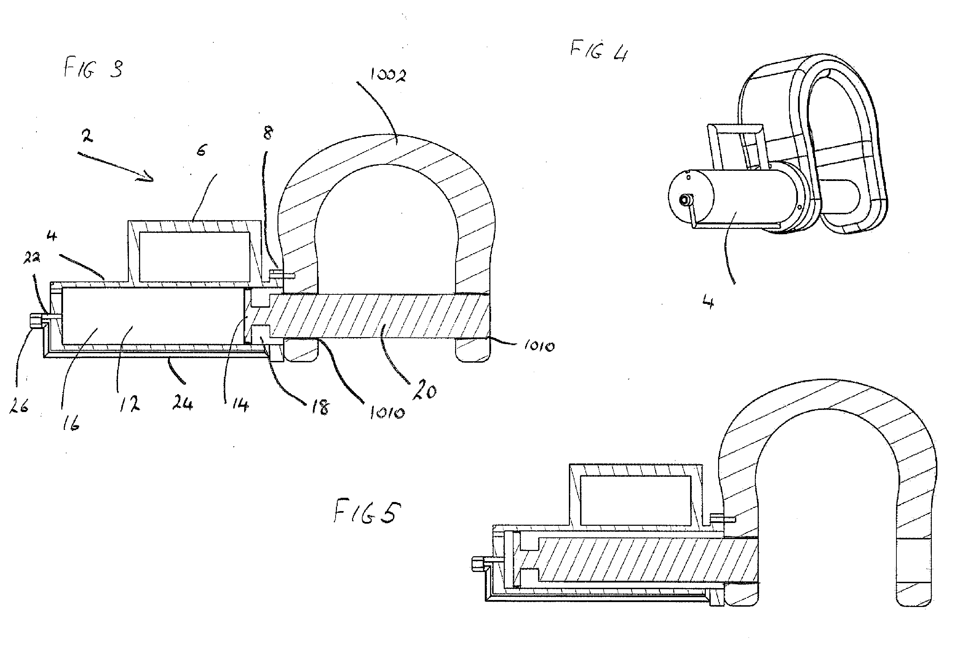

Referring to Figure 3, the actuator apparatus 2 of a first embodiment of the present invention has a body 4 defining a grab handle 6 for engagement by a remotely operated vehicle (ROV) (not shown) and an attachment portion 8 for mounting the body 4 to the shackle 1002. The body 4 defines a piston cylinder 12 in which a piston 14 sealingly slides to define a first piston chamber 16 on one side of the piston 14 and a second piston chamber 18 on the other side of the piston 14. The piston 14 is formed on the end of a pin 20 which slides between a first position in which the pin 20 engages both apertures 1010 through the shackle 1002, and a second position in which the shackle 1002 can be removed from the structure 1006. The end of the pin 20 remote from the piston 14 is exposed to the ambient water in use so that the pin 20 is subjected to the pressure of the ambient water.

The first 16 and second 18 piston chambers are connected via respective conduits 22, 24 to a hydraulic connector 26 to enable hydraulic fluid to be directed to the first piston chamber 16 or second piston chamber 18 from a pressure source such as an ROV pump (not shown) to create a pressure difference between the first 16 and second 18 piston chambers to cause the piston 14 to slide in the piston cylinder 12 under the action of the pressure of the ambient water at the end of the pin 20 remote from the piston 14.

The operation of the apparatus shown in Figures 3 to 5 will now be described.

The apparatus 2 is mounted to the shackle 1002 by means of a standard interface at the connector portion 8, and suitable connectors such as bolts 28 are used to attach the apparatus 2 to the shackle 1002. The pin 20 is aligned with apertures 1010 in the shackle 1002 and a suitable pump (not shown) on the ROV drives hydraulic fluid, which may be hydraulic oil, seawater or any other type of fluid, into the second piston chamber 18 to create a pressure difference between the first 16 and second 18 piston chambers. The pressures on both sides of the piston 14 are initially equal to each other but the additional pressure generated by the ROV creates a pressure difference which causes the pin 20 to be retracted from the bore 30 to enable rigging hardware to be removed from the structure 1006, or hydraulic fluid is driven into the first piston chamber 16 to extend the pin 20 to locate it in the bore 30 to prevent removal of the rigging hardware from the structure 1006.

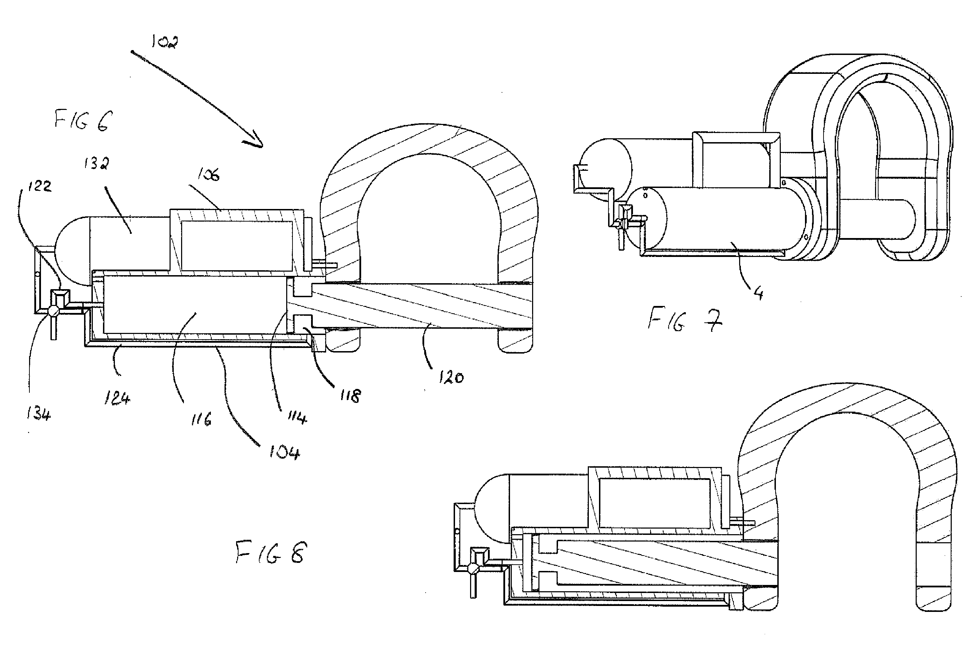

Referring to Figures 6 to 8, in which parts common to the embodiment of Figures 3 to 5 are denoted by like reference numerals but increased by 100, a pressure source comprising a bottle 132 filled with air or other gas (typically at atmospheric pressure, but this could also be at the lowest pressure practicably possible) is selectively connected via a valve 134 to first piston chamber 116 to create a pressure difference between the first 116 and second 118 piston chambers to cause the pressure of the ambient water to move the pin 120 from the position shown in Figure 6 to the position shown in Figure 8, and by using the valve 134, and applying suction on the other side of the piston, back again to the position shown in Figure 6. The valve 134 is actuated either mechanically by the ROV or acoustically, as a result of which the first piston chamber 116 is connected to the air bottle 132, which is at lower pressure than the second piston chamber 118. As a result, water can be driven into the bottle 132 as a result of which the piston 114 slides in the piston cylinder 112 to retract the pin 120 under the action of the ambient water. As a back up arrangement, a hydraulic pressure source of an ROV can be connected via the valve 134 and conduits 122, 124 to the first 116 and second 118 piston chambers respectively to create a positive or negative pressure difference between the first and second piston chambers 116, 118 to extend or retract the pin 120 relative to the body 104.

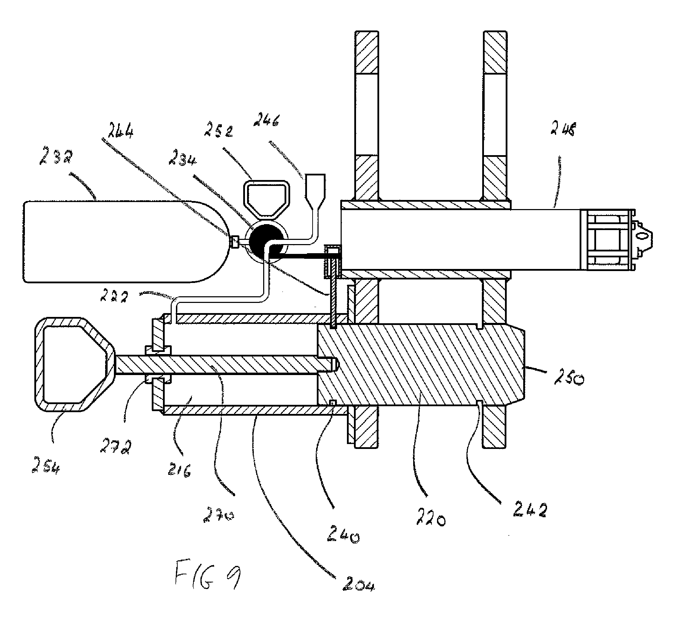

Referring to Figure 9, in which parts common to the embodiment of Figures 3 to 5 are denoted by like reference numerals but increased by 200, a third embodiment of the present invention has a body 204 defining a single piston chamber 216 and a pin 220 is provided with grooves 240, 242 for engagement with a locking pin 244 to lock the pin 220 in an extended or retracted position. The single piston chamber 216 is connected via a conduit 222 and a valve 234 either to an outlet 246 in fluid communication with the ambient water or to an air filled bottle 232 at a pressure significantly lower than the pressure of the ambient water. The locking pin 244 and valve 234 are actuated by means of an acoustic actuator 248 or by ROV through handle 252.

The components of the apparatus of Figure 9 are arranged such that when the apparatus is suspended, the centre of gravity is substantially below the suspension point when the apparatus is submerged in water so that the body 204 of the apparatus lies generally horizontally. This is achieved by arranging the acoustic actuator 248 in a central pipe of the shackle and locating the air filled bottle 232 on the same side of the suspension point as many of the components of the apparatus, so that the buoyancy of the air filled bottle 232 acts to at least partially counteract the weight of the components.

In order to retract the pin 220 from the position shown in Figure 9, the locking pin 244 is disengaged from the groove 240 in the pin 220 by means of the acoustic actuator 248. At this time, the piston chamber 216 and the end 250 of the pin 220 remote from the piston chamber 216 are connected via the conduit 222 to the ambient water, as a result of which the pin 220 is under pressure equilibrium and will remain stationary relative to the body 204. The valve 234 is then actuated by means of the acoustic actuator 248 to disconnect the piston chamber 216 from the ambient water and to connect it to the air filled bottle 232, which is at lower pressure than the pressure of the piston chamber 216. This causes a pressure difference between the piston chamber 216 and the ambient water, as a result of which the pin 220 is pushed into the piston chamber 216 under the action of the ambient water.

If the valve 234 or actuator 248 should fail, an ROV (not shown) can also manually actuate the valve 234 by means of a first handle 252 or can pull the pin 220 into the piston chamber 216 by means of a second handle 254 when the piston chamber 216 is connected to the ambient water via the outlet 246. In addition, an ROV can be connected to outlet 246 such that its pump pumps water out of the first piston chamber 216 via conduit 222 in order to create a pressure difference between the first piston chamber 216 and the ambient water.

The second handle 254 is mounted to the pin 220 by means of a removable shaft 270 slidably passing through a seal 272 in a removable end cap 274 mounted to the body 204. The handle 254 acts as a braking means for resisting motion of the pin 220 towards the end cap 274, since the ambient water acting on handle 254 and the ambient water acting on end face 250 of pin 220 urge the pin 220 in opposite directions relative to the body 204. This therefore reduces the speed with which pin 220 moves towards end cap 274 in the case of deep water, where pressure differences acting on the pin 220 can be very large.

By suitable choice of dimensions of handle 254, the rate of retardation of motion of pin 220 can be selected to be suitable for the particular depth of water in which the apparatus is to be used.

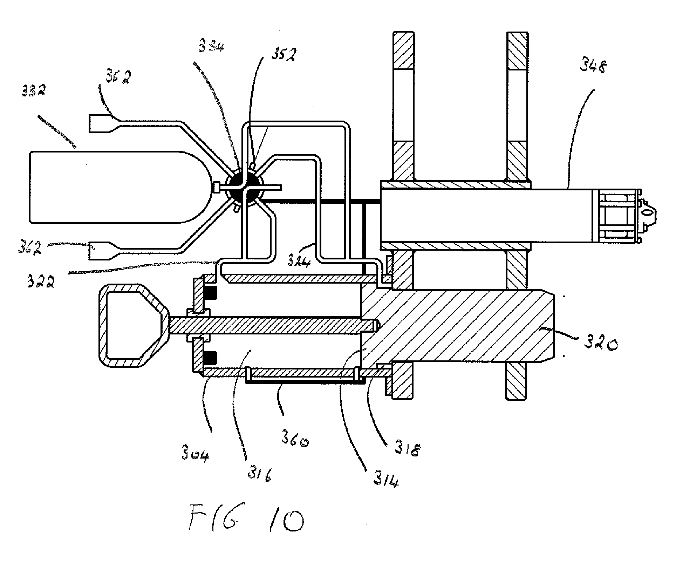

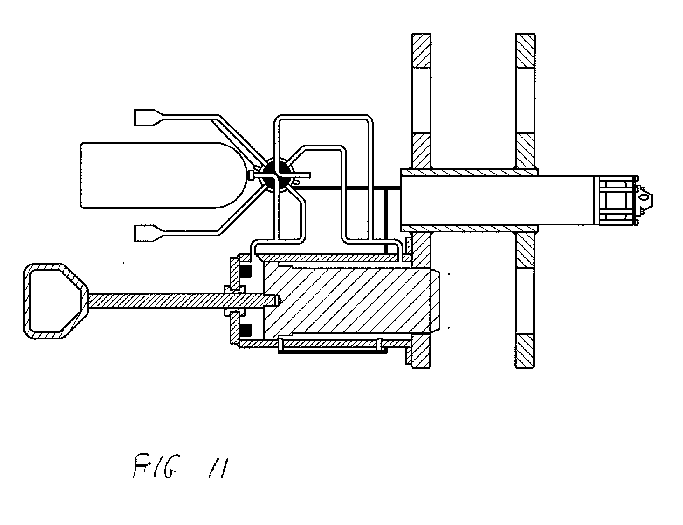

Referring to Figures 10 and 11, in which parts common to the embodiment of Figures 6 to 8 are denoted by like reference numerals but increased by 200, the piston 314 on the end of pin 320 slides in the body 304 to define first 316 and second 318 piston chambers, which are connected via respective conduits 322, 324 to a valve 334. A piston end position latch 360 engages the piston 314 to lock it in position relative to the body 304, and is released by means of acoustic actuator 348, or by a mechanical release when connected to connector 362, or manually operated by an ROV by turning valve 352. The valve 334 is actuable by means of the acoustic actuator 348 to connect air filled bottle to the first piston chamber 316 (Figure 10) to enable the pin 320 to be retracted into the piston chamber 316, or to the second piston chamber 318 (Figure 11) to enable the pin 320 to be urged to the right as shown in Figure 11.

In the case of failure of the acoustic actuator 348, hydraulic pumps of an ROV (not shown) can be connected via ROV hydraulic connectors 362 to the first 316 and second 318 piston chambers and the valve 334 actuated by the ROV by means of a handle 352. This enables a positive or negative pressure difference to be created between the first 316 and second 318 piston chambers, so that the pin 320 can be extended out of or retracted into the body 304.

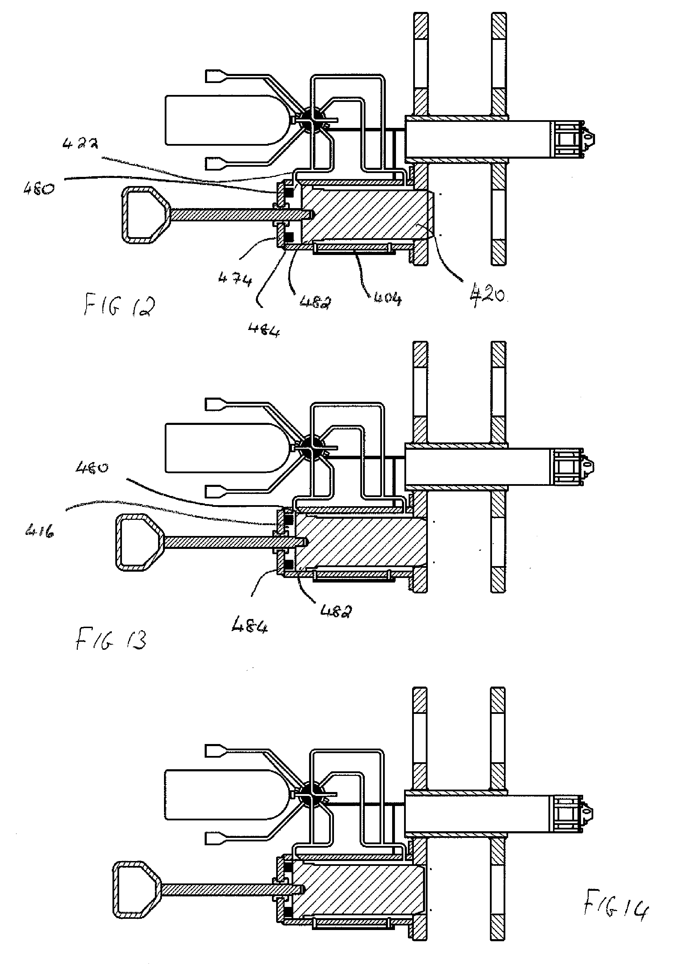

Referring to Figures 12 to 14, in which parts common to the embodiment of Figures 10 and 11 are denoted by like reference numerals but increased by 100, an apparatus of a fifth embodiment of the present invention has a braking means for resisting movement of pin 420 towards end cap 474 of body 404, wherein the braking means is in the form of an enlarged inlet 480 to conduit 422 which cooperates with an annular enlargement 482 on the end of the pin 420 facing the end cap 474. As shown in Figure 12, as the pin 420 moves towards the end cap 474, the inlet 480 to conduit 422 is initially unobstructed. As the pin 420 reaches the position shown in Figure 13, the annular enlargement 482 on pin 420 partially closes the inlet 480 of conduit 422, as a result of which the rate at which water can be driven out of the piston chamber 416 via conduit 422 is reduced. This in turn resists motion of the pin 420 towards the end cap 474. When the pin 420 reaches the position shown in Figure 14, the inlet 480 is obstructed to a greater extent than in the position shown in Figure 13, which further restricts movement of the pin 420 towards end cap 474, and the end face of the pin 420 comes to rest against rubber dampers 484 on the inner face of end cap 474.

In a further embodiment, the pin 120 can be replaced by a blade for cutting cable by extension of the blade from the body of the apparatus.

It will be appreciated by persons skilled in the art that the above embodiments have been described by way of example only, and not in any limitative sense, and that various alterations and modifications are possible without departure from the scope of the invention as defined by the appended claims.

## Claims

1. An actuator apparatus adapted to be remotely actuated underwater, the apparatus comprising:
a body;
at least one piston member having at least one respective actuator member extending therefrom, wherein at least one said piston member is adapted to sealingly engage the body to define a respective piston chamber; and
connector means adapted to connect at least one said piston chamber to at least one respective pressure source to create a pressure difference to cause the corresponding said piston member to move relative to the body at least partly under the action of pressure of the ambient water to cause the or each corresponding said actuator member to move from a first position thereof to a second position thereof.

2. An apparatus according to claim 1, further comprising at least one first pressure source adapted to have a lower pressure than the pressure in at least one said piston chamber prior to connection thereto.

3. An apparatus according to claim 2, wherein at least one said pressure source comprises at least one respective gas container.

4. An apparatus according to any one of the preceding claims, wherein at least one said piston member is adapted to sealingly engage the body to define a respective first said piston chamber and a respective second said piston chamber, and said connector means is adapted to connect at least one said first piston chamber and the cooperating said second piston chamber to respective first and second sources of pressure urging the corresponding said actuator member in opposite directions.

5. An apparatus according to any one of the preceding claims, further comprising locking means for locking at least one said piston member in position relative to the body.

6. An apparatus according to any one of the preceding claims, wherein said connector means and/or said locking means is remotely operable.

7. An apparatus according to claim 6, wherein said connector means and/or said locking means is operable by means of a remotely operated vehicle (ROV).

8. An apparatus according to claim 6 or 7, wherein said connector means and/or said locking means is acoustically operable.

9. An apparatus according to any one of the preceding claims, wherein at least one said piston chamber is adapted to contain water and to be in fluid communication with water surrounding the apparatus.

10. An apparatus according to any one of the preceding claims, wherein at least one said actuator member is a blade adapted to cut a cable, rope or pin.

11. An apparatus according to any one of the preceding claims, further comprising at least one suspension portion for enabling the apparatus to be suspended such that the suspension portion is substantially vertically above the centre of gravity of the apparatus when submerged.

12. An apparatus according to any one of the preceding claims, further comprising braking means for resisting movement of at least one said actuator member to said second position thereof.

13. An apparatus according to claim 12, wherein said braking means comprises restrictor means for restricting flow of water out of at least one said piston chamber as a result of movement of at least one said actuator member from said first position thereof to said second position thereof.

14. An apparatus according to claim 12 or 13, wherein said braking means comprises at least one respective extension member extending from at least one said actuator member through said body to contact the ambient water such that the ambient water in contact with the or each extension member urges the corresponding said actuator member towards said first position thereof.

15. An apparatus according to claim 14, wherein said body further comprises at least one removable position through which at least one said actuator member extends in use.
